# EUROPEAN PATENT APPLICATION

(11) **EP 2 584 263 A1**
(43) Date of publication of application: **24.04.2013**
(21) Application number: 11797911.2
(22) Date of filing: 27.04.2011
(51) Int. Cl.: F23G 7/06, B01D 53/46, B01D 53/68, F23J 15/08

(54) **GAS PROCESSING SYSTEM**

(30) Priority: 21.06.2010 JP 2010140384
(71) Applicant: Edwards Japan Limited, Yachiyo-shi Chiba 276-8523 (JP)
(72) Inventor: NAKAYAMA Izumi, Yachiyo-shi Chiba 276-8523 (JP); TAKAHASHI Katsunori, Yachiyo-shi Chiba 276-8523 (JP)
(74) Representative: Clark, Charles Robert
(86) International application number: PCT/JP2011/060255
(87) International publication number: WO 2011/162023

(57) **Abstract**

Provided is a gas abatement system including piping. This system can be made overall more compact, with better serviceability, and at a lower cost. A gas abatement system is provided with: a water-cooled combustion-type abatement apparatus that performs combustion decomposition and scrub dust collection on gases to be processed that include silane, which is a semiconductor material gas, as well as a gaseous fluoride such as NF3, CF4, C2F6, SF6, CHF3 or CF6, that is used as a cleaning gas, for instance, in plasma cleaning of air-tight chambers C1, C2 ... Cn of a plasma CVD apparatus or the like; an electrostatic precipitator that performs electric dust collection on the processed gas after performing combustion decomposition and scrub dust collection; and a pipe that feeds the processed gas after electric dust collection to a plant scrubber facility.

## Description

The present invention relates to a gas abatement system that abates (detoxifies) silane (SiH4) and gaseous fluorides such as nitrogen trifluoride (NF3), and more particularly, to a gas abatement system including piping that can be made overall more compact, with better serviceability, and at a lower cost.

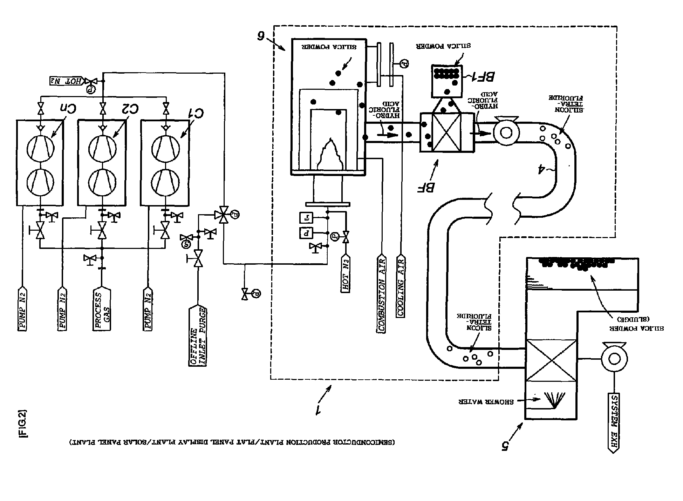

Fig. 2 is a schematic diagram illustrating an example of a conventional gas abatement system in a semiconductor production plant, a flat panel display plant or a solar panel plant. In a semiconductor production plant, various processes, for instance CVD (chemical vapor deposition), etching and the like are carried out in respective air-tight chambers C1, C2...Cn. Process gases, for instance silane, that are used in these processes, as well as gaseous substances that are generated secondarily in the processes, are fed to a gas abatement system 1, where they are abated. Cleaning gases such as nitrogen trifluoride or the like that are used in plasma automatic cleaning of the air-tight chambers C1, C2 ... Cn are likewise fed to the gas abatement system 1, where they are abated.

In the gas abatement system 1, gases discharged out of the air-tight chambers C1, C2...Cn (hereafter, "gases to be processed") undergo combustion decomposition in a combustion-type abatement apparatus 6. The processed gas after combustion decomposition is fed to a bag filter BF, and dust in the processed gas (dust in the form of silica (SiO₂) powder, since the gas that undergoes combustion decomposition is silane) is collected in the bag filter BF and is recovered in a compacting container BF1. The processed gas after dust collection passes through a pipe 4 in the plant, and is fed to a plant scrubber facility 5, where the gas undergoes an abatement process, for instance, an acid treatment by spraying of shower water.

However, the problems below arise upon abatement (detoxification) of silane and nitrogen trifluoride using the above-described conventional gas abatement system.
(1) Silica powder, which results from combustion decomposition of silane, is present in the bag filter BF and the compacting container BF1; also, a large amount of hydrofluoric acid (HF), generated upon combustion decomposition of nitrogen trifluoride, passes through the bag filter BF. Therefore, the passing hydrofluoric acid reacts with the silica powder in the bag filter BF and the compacting container BF1, giving rise to silicon tetrafluoride gas (SiF4). The generated silicon tetrafluoride gas passes through the pipe 4 and flows into the plant scrubber facility 5. As a result, a large amount of silica powder sludge is generated again in the plant scrubber facility 5 on account of the reaction between the silicon tetrafluoride gas and shower water. Recovery of this sludge requires hence frequent maintenance.
(2) Large amounts of hydrofluoric acid generated upon combustion decomposition of nitrogen trifluoride are ultimately subjected to an acid treatment at the plant scrubber facility 5. Therefore, the pipe 4 and so forth, plus the entire piping from the combustion-type abatement apparatus 6 to the plant scrubber facility 5, as well as the bag filter BF, must be treated against corrosion (for instance, Japanese Patent Application Publication No. 2007-232308 discloses one instance of such anti-corrosion treatment).
(3) In order to convey , up to the bag filter BF, silica powder that is present in the processed gas after silane combustion decomposition, and in order to lower the temperature of the processed gas after combustion decomposition, the airflow in the entire piping system from the combustion-type abatement apparatus 6 up to the plant scrubber facility 5 (including the pipe 4) must amount to a substantial air volume (for instance, about 60 m³/min); also, the entire piping system must of large diameter and must be made up of a metal such as stainless steel, in order to cope with that substantial air volume. Alternatively, the interior of the pipes must have an anti-corrosion coating, or there must be used a large plant scrubber facility 5 having large processing capacity , which inevitably makes the entire gas abatement system, including the plant scrubber facility 5, into a large-scale, high-cost system.

In order to solve the above problems, it is an object of the present invention to provide a gas abatement system that can be made overall more compact, with better serviceability, and at a lower cost, including piping.

To attain the above goal, the present invention is a gas abatement system that abates gases to be processed, in a plant, wherein the gas abatement system includes: a water-cooled combustion-type abatement apparatus that performs combustion decomposition and scrub dust collection on the gases to be processed; an electrostatic precipitator that performs electric dust collection on processed gas after performing the combustion decomposition and scrub dust xcollection; and a pipe that feeds the processed gas, after the electric dust collection, to an existing scrubber facility in the plant.

In the above invention, the pipe may be a metal pipe of stainless steel or other metals having an inner face not subjected to an anti-corrosion treatment, or a resin pipe formed of vinyl chloride or some other resin.

In the above invention, the gas abatement system may be provided with an exhaust pump. In such a configuration, the gases to be processed are discharged by the exhaust pump.

Examples of the gases to be processed include, for instance, silane, being a semiconductor material gas, as well as a gaseous fluoride such as NF3, CF4, C2F6, SF6, CHF3 or CF6, that is used as a cleaning gas, for instance, in plasma cleaning of air-tight chambers of a plasma CVD apparatus or the like.

For instance, silica powder and hydrofluoric acid are generated as products of combustion decomposition in a case where silane or nitrogen trifluoride, as a gas to be processed, is abated in the plant. By virtue of the above features of the present invention, however, hydrofluoric acid is collected by dust scrubbing at the water-cooled combustion-type abatement apparatus, which lies upstream of the pipe. As a result, the concentration of hydrofluoric acid that flows into the pipe is kept no greater than a TLV value (allowable concentration), and hence the inner face of the pipe need not be subjected to an anti-corrosion treatment. Also, the processed gas after combustion decomposition is cooled by scrub dust collection in the water-cooled combustion-type abatement apparatus. Accordingly, airflow in the pipe may be small, and no large-diameter and durable pipe need be used. Therefore, the pipe that is used can be a small-diameter inexpensive pipe having a simple structure, for instance a small-diameter resin pipe formed of vinyl chloride or other resin; or a small-diameter metal pipe of stainless steel or other metals, the inner face of which has not been subjected to an anti-corrosion treatment. Since the air volume in the pipe may be small, the size of the plant scrubber facility can be reduced in accordance with that air volume, and the cost and scale of the gas abatement system as a whole, including the pipe, can be reduced.

In the present invention, silica powder is recovered by being dissolved into waste water, through scrub dust collection in the water-cooled combustion-type abatement apparatus. Therefore, the amount of silica powder that flows into the plant scrubber facility is significantly reduced. Hydrofluoric acid as well is collected through scrub dust collection in the water-cooled combustion-type abatement apparatus. Therefore, maintenance of the plant scrubber facility is easy, in that no silicon tetrafluoride gas is generated through reaction between hydrofluoric acid and silica powder in the plant scrubber facility, and in that the generated silicon tetrafluoride gas does not form silica powder anew, through reaction with water, in the plant scrubber facility.
Fig. 1 is a system schematic diagram of an example where a gas abatement system in an embodiment of the present invention is used in a semiconductor production plant; and
Fig. 2 is a schematic diagram illustrating an example of a conventional gas abatement system in a semiconductor production plant, a flat panel display plant or a solar panel plant.

Preferred embodiments of the invention will be explained next with reference to accompanying drawings.

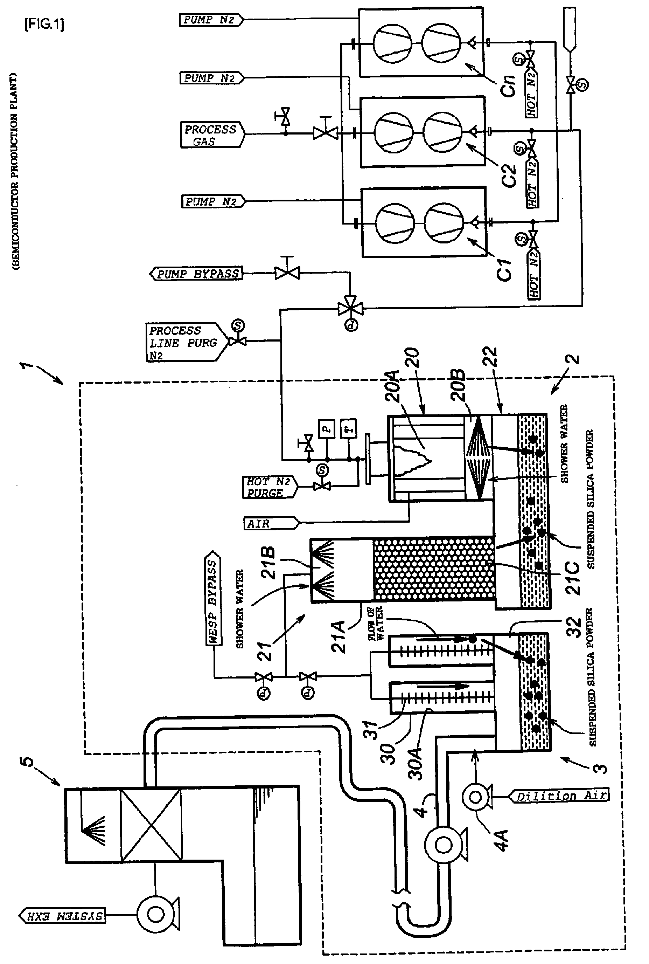

Fig. 1 is a system schematic diagram of an example where a gas abatement system in an embodiment of the present invention is used in a semiconductor production plant.

In the semiconductor production plant of Fig. 1, various processes, for instance CVD (chemical vapor deposition), etching and the like are carried out in respective air-tight chambers C1, C2...Cn. Process gases, for instance silane, used in these processes, as well as gaseous substances that are generated secondarily in the processes, are discharged out of the air-tight chambers C1, C2...Cn by exhaust pumps, not shown, that are connected to the air-tight chambers C1, C2...Cn. Cleaning gases, such as nitrogen trifluoride, that are used in plasma automatic cleaning of the air-tight chambers C1, C2...Cn, are similarly discharged out of the air-tight chambers C1, C2...Cn. The gases to be processed that are discharged by the exhaust pumps out of the air-tight chambers C1, C2...Cn are abated in the gas abatement system 1 in the plant.

The gas abatement system 1 comprises: a water-cooled combustion-type abatement apparatus 2 that performs combustion decomposition and scrub dust collection on gases to be processed that are discharged by the air-tight chambers C1, C2...Cn; an electrostatic precipitator 3 that performs electric dust collection on the processed gas after combustion decomposition and scrub dust collection; and a pipe 4 that feeds the processed gas, after electric dust collection, to a plant scrubber facility 5 (scrubber facility already installed in the plant).

The water-cooled combustion-type abatement apparatus 2 comprises a combustion furnace 20 provided with a combustion chamber 20A into which there flow the gases to be processed that are discharged out of the air-tight chambers C1, C2 ... Cn; a water scrubber process chamber that is built into the combustion furnace 20 (hereafter referred to as "combustion furnace built-in water scrubber process chamber 20B") ; a water scrubber 21 provided downstream of the combustion furnace 20; and a wastewater tank 22 that recovers and stores waste water from the combustion furnace built-in water scrubber process chamber 20B and the water scrubber 21. The water-cooled combustion-type abatement apparatus 2 is configured in such a manner that the gases to be processed that are discharged out of the air-tight chambers C1, C2...Cn pass sequentially through the combustion chamber 20A, the combustion furnace built-in water scrubber process chamber 20B, the wastewater tank 22, and the water scrubber 21, and pass then into the electrostatic precipitator 3.

In the combustion chamber 20A, the gases to be processed that are discharged out of the air-tight chambers C1, C2...Cn undergo combustion decomposition at high-temperature. The processed gas after combustion decomposition flows into the combustion furnace built-in water scrubber process chamber 20B.

Shower water is sprayed in the combustion furnace built-in water scrubber process chamber 20B, such that the processed gas after combustion decomposition passes through this shower water spraying region; as a result, hazardous components are removed from the processed gas after combustion decomposition, in that, for instance, the shower water captures dust in the processed gas (for instance, silica powder generated as a result of combustion decomposition of silane) and in that the shower water collects gas components, out of the processed gas, that are readily soluble in water (for instance, hydrofluoric acid that is generated through combustion decomposition of nitrogen trifluoride, which is used as a cleaning gas in the air-tight chambers C1, C2...Cn). The removed hazardous components flow into the wastewater tank 22 together with waste water of the shower water. The combustion furnace built-in water scrubber process chamber 20B functions also as cooling means that cools, by means of the shower water, the processed gas after combustion decomposition.

The water scrubber 21 has a shower water region section 21B inward of a cylindrical scrubber outer case 21A, and a gas contact region section 21C that is provided with ring packing to afford increased surface area. The water scrubber 21 is configured in such a manner that gas processed in the combustion chamber 20A and the combustion furnace built-in water scrubber process chamber 20B (processed gas after combustion decomposition and scrub dust collection) flows into the water scrubber 21 from the bottom of the cylindrical scrubber outer case 21A. The shower water in the shower water region section 21B is supplied also, through dripping, into the gas contact region section 21C. Thus, the processed gas, after combustion decomposition and scrub dust collecion, that flows into the cylindrical scrubber outer case 21A, passes through the gas contact region section 21C and flows into the overlying shower water region section 21B. At this time, dust in the processed gas is captured by coming into contact with shower water in the shower water region section 21B and in the portion provided with ring packing, for increased surface area, of the gas contact region section 21C. The water scrubber 21 functions also as cooling means that, by way of the shower water, further cools the processed gas after combustion decomposition and scrub dust collection.

The wastewater tank 22 has a structure wherein waste water from the combustion furnace built-in water scrubber process chamber 20B and waste water from the water scrubber 21 flow into the wastewater tank 22, in such a manner that the water surface in the wastewater tank 22 constitutes a gas flow path. In the way towards the water scrubber 21, the processed gas that has been processed in the combustion furnace built-in water scrubber process chamber 20B passes over the water surface in the wastewater tank 22, and becomes thereupon cooled by cold air from the water surface. That is, the wastewater tank 22 as well functions as cooling means that cools processed gas.

The electrostatic precipitator 3 utilizes a structure wherein a potential difference arises between a metal rod 31 that is provided at the inner central portion of each dust collection drum 30, and an inner face 30A of the dust collection drum 30; a structure wherein a water flow film is formed on the inner face 30A of each dust collection drum 30; and a structure wherein gas processed in the water-cooled combustion-type abatement apparatus 2 (processed gas after combustion decomposition and scrub dust collection) flows into the electrostatic precipitator 3 from the top of the dust collection drums 30. Dust in the processed gas that flows into the dust collection drums 30 is drawn towards the inner face 30A of each dust collection drum 30, on account of the potential difference, is captured and washed off by the water flow film that flows along the inner face, and flows into the wastewater tank 32 out of the bottom of the dust collection drums 30. The processed gas, after having had dust thus removed therefrom by electric dust collection, passes over the water surface in the wastewater tank 32 and flows into the pipe 4. That is, also the wastewater tank 32 of the electrostatic precipitator 3 functions as cooling means of processed gas, like the wastewater tank 22 of the water-cooled combustion-type abatement apparatus 2. The inner space of the dust collection drums 30 constitutes a cold-air atmosphere on account of the flow of water along the inner faces of the dust collection drums 30. Therefore, the dust collection drums 30 as well function as cooling means of processed gas.

As the pipe 4 there can be used a small-diameter inexpensive pipe having a simple structure, for instance a small-diameter resin pipe comprising vinyl chloride or other resin; or a small-diameter metal pipe of stainless steel or other metals, the inner face of which has not been subjected to an anti-corrosion treatment. The reasons for this are as follows.

If the interior of the pipe 4 is moist, small amounts of dust that fails to be collected by the electrostatic precipitator 3 adhere to, and become deposited on, the inner face of the pipe 4. The pipe 4 must be serviced as a result frequently, to remove such deposits. In the present embodiment, therefore, dry air is supplied by a blower fan 4A provided in the vicinity of the inlet of the pipe 4, in such a way so as to keep the interior of the pipe 4 at or below a given wetness, at all times.

A gas process operation in the gas abatement system is explained next. The explanation below on a gas process operation is based on an example where silane and nitrogen trifluoride gases are abated (detoxified). An exhaust pump causes these gases to flow into the water-cooled combustion-type abatement apparatus 2 from the air-tight chambers C1, C2...Cn.

### <Silane abatement>

Silane that flows into the water-cooled combustion-type abatement apparatus 2 undergoes firstly combustion decomposition at the combustion furnace 20. Silica powder is generated as a product upon abatement of silane by combustion decomposition. The generated silica powder flows into the combustion furnace built-in water scrubber process chamber 20B along with gas (processed gas) that is generated as a result of combustion decomposition, the silica powder is collected by the shower water, and flows, accompanying the flow of water, into the wastewater tank 22 of the water-cooled combustion-type abatement apparatus 2.

The processed gas that passes into the wastewater tank 22 of the water-cooled combustion-type abatement apparatus 2 comprises silica powder that has failed to be captured in the combustion furnace built-in water scrubber process chamber 20B. The processed gas, which comprises such silica powder, flows into the water scrubber 21, while being cooled upon passing over the water surface in the wastewater tank 22, and passes through the gas contact region section 21C and the shower water region section 21B, towards the electrostatic precipitator 3. The silica powder in the processed gas is collected herein mainly through contact with shower water. The collected silica powder flows into the wastewater tank 22 accompanying the flow of shower water.

The processed gas, after combustion decomposition and scrub dust collection, that reaches the electrostatic precipitator 3 comprises silica powder that has failed to be collected in the combustion furnace built-in water scrubber process chamber 20B, the shower water region section 21B and so forth. The silica powder in such processed gas is drawn towards the inner face of the dust collection drums 30, on account of the potential difference, is captured and washed off by the water film that flows along the inner face, and flows into the wastewater tank 32 out of the bottom of the dust collection drums 30.

The silica powder that flows into, and is recovered from, the wastewater tanks 22, 32 and that comes from the combustion furnace built-in water scrubber process chamber 20B and the water scrubber 21 of the water-cooled combustion-type abatement apparatus 2, and from the electrostatic precipitator 3, has a particle size of about 1 µ. Therefore, the silica powder does not precipitate, but remains suspended in the water in the wastewater tank 22.

### <Nitrogen trifluoride abatement>

Nitrogen trifluoride (or F₂ that is formed by plasma) that flows into the water-cooled combustion-type abatement apparatus 2 undergoes also, firstly, combustion decomposition at the combustion furnace 20, in the same way as the silane explained above. Nitrogen trifluoride generates hydrofluoric acid as a product upon abatement by combustion decomposition. The generated hydrofluoric acid passes through the combustion furnace built-in water scrubber process chamber 20B and flows into the wastewater tank 22. However, hydrofluoric acid dissolves into the shower water, and hence the concentration of hydrofluoric acid that flows into the wastewater tank 22 is significantly reduced. Even though hydrofluoric acid flows thus into the wastewater tank 22, no reaction takes place therefore between the hydrofluoric acid and the silica powder recovered in the wastewater tank 22. The shower water into which the hydrofluoric acid is dissolved (acidic waste water) flows into the wastewater tank 22.

The remaining hydrofluoric acid that flows into the wastewater tank 22 (i.e. fraction that does not dissolve into the shower water of the combustion furnace built-in water scrubber process chamber 20B) passes over the water surface in the wastewater tank 22, while being cooled thereby, and flows into the water scrubber 21. The inflowing hydrofluoric acid passes through the gas contact region section 21C and the shower water region section 21B, and reaches the electrostatic precipitator 3. A greater part of the hydrofluoric acid dissolves into the shower water of the shower water region section 21B, through contact with the shower water, so that the concentration of the hydrofluoric acid is significantly lowered as a result. The shower water into which the hydrofluoric acid has dissolved (acidic waste water) flows into the wastewater tank 22. Hydrofluoric acid is collected also by being dissolved into the flowing water in the electrostatic precipitator 3. The flowing water having hydrofluoric acid dissolved therein (acidic waste water) flows into the wastewater tank 32 of the electrostatic precipitator 3.

A small amount of hydrofluoric acid that fails to be removed at the combustion furnace built-in water scrubber process chamber 20B, the shower water region section 21B and the electrostatic precipitator 3, passes over the water surface in the wastewater tank 32, flows into the pipe 4, passes through the latter, and reaches the plant scrubber facility 5. At the plant scrubber facility 5, the small amount of hydrofluoric acid is sprayed with shower water; as a result, the hydrofluoric acid becomes abated by dissolving into the shower water.

The acidic waste water in the wastewater tanks 22, 32 undergoes heat removal in a heat exchanger, and has the pH thereof adjusted. The silica powder is recovered by a filter, and the waste water is supplied thereafter, as replenishment water, to the wastewater tanks 22, 32.

In the present gas abatement system 1 as explained above, the pipe 4 that is used can be a small-diameter inexpensive pipe having a simple structure, for instance a small-diameter resin pipe comprising vinyl chloride or other resin; or a small-diameter metal pipe of stainless steel or other metals, the inner face of which has not been subjected to an anti-corrosion treatment. The reasons for this are as follows.
(1) Hydrofluoric acid is collected in the shower water region section 21B and the combustion furnace built-in water scrubber process chamber 20B of the water scrubber 21, upstream of the pipe 4. As a result, the concentration of hydrofluoric acid that flows into the pipe 4 is kept no greater than a TLV value. Therefore, the inner face of the pipe 4 need not be subjected to an anti-corrosion treatment.
(2) The processed gas after combustion decomposition is cooled at the water scrubber 21, the combustion furnace built-in water scrubber process chamber 20B and the wastewater tank 22 of the water-cooled combustion-type abatement apparatus 2, and also at the dust collection drums 30 and the wastewater tank 32 of the electrostatic precipitator 3, upstream of the pipe 4. Therefore, the air volume in the pipe may be of about 9 m³/min, and no large-diameter pipe need be used.

As explained above, the air volume in the pipe 4 in the present gas abatement system 1 may be small. Therefore, the size of the plant scrubber facility 5 may be reduced in accordance with that air volume.

In the present gas abatement system 1, silica powder dissolved in waste water is recovered in the wastewater tank 22 of the water-cooled combustion-type abatement apparatus 2 and in the wastewater tank 32 of the electrostatic precipitator 3, and hence the amount of silica powder that flows into the plant scrubber facility 5 is significantly reduced. Also, hydrofluoric acid is collected at the shower water region section 21B and the combustion furnace built-in water scrubber process chamber 20B of the water scrubber 21, upstream of the plant scrubber facility 5. At the plant scrubber facility 5, therefore, no silicon tetrafluoride gas is generated, through reaction of hydrofluoric acid and silica powder, and no silica powder is formed anew through reaction between the generated silicon tetrafluoride gas and shower water. Maintenance of the plant scrubber facility 5 becomes easier as a result.

Besides the semiconductor production plant of Fig. 1, the gas abatement system according to the present invention can be used as a gas abatement system in other plants, for instance flat panel display plants and solar panel plants.

| | |
|---|---|
| 1 | gas abatement system |
| 2 | water-cooled combustion-type abatement apparatus |
| 20 | combustion furnace |
| 20A | combustion chamber |
| 20B | combustion furnace built-in water scrubber process chamber |
| 21 | water scrubber |
| 21A | cylindrical scrubber outer case |
| 21B | shower water region section |
| 21C | gas contact region section |
| 22 | wastewater tank |
| 3 | electric dust collection apparatus |
| 30 | dust collection drum |
| 30A | inner face of dust collection drum |
| 31 | metal rod |
| 32 | wastewater tank |
| 4 | pipe |
| 4A | blower fan |
| 5 | plant scrubber facility |
| 6 | combustion-type abatement apparatus |
| C1, C2...Cn | air-tight chambers |
| BF | bag filter |

## Claims

1. A gas abatement system that abates gases to be processed in a plant, wherein
the gas abatement system comprises:
a water-cooled combustion-type abatement apparatus that performs combustion decomposition and scrub dust collection on the gases to be processed;
an electrostatic precipitator that performs electric dust collection on the processed gas after performing the combustion decomposition and scrub dust collection; and
a pipe that feeds the processed gas, after the electric dust collection, to an existing scrubber facility in the plant.

2. The gas abatement system according to claim 1,
wherein the pipe is a metal pipe of stainless steel or other metals having an inner face not subjected to an anti-corrosion treatment, or a resin pipe of vinyl chloride or other resins.

3. The gas abatement system according to claim 1 or 2, wherein the gas abatement system is provided with an exhaust pump.
